# EUROPEAN PATENT APPLICATION

(11) **EP 1 835 205 A2**
(43) Date of publication of application: **19.09.2007**
(21) Application number: 07101556.4
(22) Date of filing: 01.02.2007
(51) Int. Cl.: F16H 61/44

(54) **Hydraulic power transmission device**

(30) Priority: 16.03.2006 JP 2006073478
(71) Applicant: Kobelco Cranes Co., Ltd., Shinagawa-ku Tokyo 141-8626 (JP)
(72) Inventor: Kobayashi, Takahiro Okubo Plant in Kobelco Cranes, Akashi-shi Hyogo 674-0063 (JP); Tsunoo, Taisuke Okubo Plant in Kobelco Cranes Co.,, Akashi-shi Hyogo 674-0063 (JP); Terasaka, Joji Okubo Plant in Kobelco Cranes Co., Akashi-shi Hyogo 674-0063 (JP); Sugano, Naoki Kobe Corp. Research Laboratories, Nishi-ku Kobe-shi Hyogo 651-2271 (JP); Hori, Naoto Kobe Corp. Research Laboratories, Nishi-ku Kobe-shi Hyogo 651-2271 (JP)
(74) Representative: TBK-Patent

(57) **Abstract**

A hydraulic power transmission device A according to the present invention includes a hydraulic pump 3 capable of discharging pressure oil in both directions and a plurality of hydraulic motors 6 and 7 connected in parallel with the hydraulic pump. In the plurality of hydraulic motors, at least one hydraulic motor is a variable displacement type. Output axes 6a and 7a of the plurality of hydraulic motors are connected to a common member 9 in order to transmit power. The one hydraulic motor 6 of the variable displacement type is an electronic control type capable of changing a capacity to zero. A shutoff valve 15 is provided, which is for shutting off a supply of pressure oil from the hydraulic pump to the hydraulic motor in the case that the capacity of the hydraulic motor 6 is zero. The shutoff valve 15 communicates both sides of inlet/outlet of the hydraulic motor at the shutoff position. Accordingly, in the present invention, energy loss can be reduced and highly effective.

## Description

### BACKGROUND OF THE INVENTION

### 1. Field of the Invention

The present invention relates to a hydraulic power transmission device provided in a travel drive system, a winch drive system, or the like in a working machine such as a traveling type crane.

### 2. Description of the Related Art

Conventionally, as a hydraulic power transmission device of this type, for example, the device described in Japanese Unexamined Patent Application Publication No. 2001-200907 has been known. The hydraulic power transmission device described in the publication includes a hydraulic pump which is driven by an engine and can discharge pressure oil in both directions, a plurality of variable displacement hydraulic motors connected in parallel with the hydraulic pump, and a common rotary shaft connected to output axes of the plurality of hydraulic motors in order to transmit power through a gear or the like respectively. In changing a rotational speed of the rotary shaft from a low speed to a high speed, in order to obtain a torque necessary for acceleration, first, capacities of the plurality of hydraulic motors are increased. Next, the capacity of one of the hydraulic motors is reduced. In the case that the capacity becomes a minimum value, then the capacities of other hydraulic motors are reduced.

In the case that the capacity of the hydraulic motor becomes the minimum value, the hydraulic motor is in a substantially non-operated state. However, the hydraulic motor continues to rotate. This causes an energy loss. To solve the disadvantage, in the above described patent document, a clutch is provided between the output axes of the hydraulic motors and the common rotary shaft, and in the case that the capacity of the hydraulic motors becomes the minimum value, the clutch is disconnected.

However, the clutch is relatively expensive and heavy. This may cause an increase in cost or in weight of the device. Further, at the time of switching the clutch, especially at the time of connection, a shock may occur.

Further, even if the clutch is disconnected, the hydraulic motor sometimes continues to rotate. That is, in the case of the hydraulic power transmission device installed in the working machine, as the variable displacement hydraulic motors, conventionally, hydraulic control type motors in which a capacity is controlled to be changed by oil pressure have been used. Generally, in the case of the variable displacement hydraulic motors, the minimum value of the capacity does not become zero. Accordingly, even if the capacity of the hydraulic control type hydraulic motor is set to be the minimum value and the clutch is disconnected, pressure oil at the minimum value flows into the hydraulic motor of the minimum capacity from the hydraulic pump. As the output axis of the hydraulic motor continues to rotate, the energy for the rotation is lost.

### SUMMARY OF THE INVENTION

Accordingly, it is an object of the present invention, in place of the above clutch, or in addition to the clutch, to provide a hydraulic power transmission device capable of reducing energy loss to realize high efficiency by shutting off a supply of pressure oil to one hydraulic motor in the case that a capacity of the variable displacement hydraulic motor becomes zero.

In the present invention, as the hydraulic power transmission device, a hydraulic pump capable of discharging pressure oil in both directions and a plurality of hydraulic motors connected in parallel with the hydraulic pump are provided. At least one hydraulic motor of the plurality of the hydraulic motors is a variable displacement type. Output axes of the plurality of hydraulic motors are connected to a common member in order to transmit power. In such a structure, the one hydraulic motor of the variable displacement type is an electronic control type which can change a capacity to zero. In the present invention, a shutoff valve is provided, which is for shutting off a supply of pressure oil from the hydraulic pump to the hydraulic motor in the case that the capacity of the hydraulic motor is zero. The shutoff valve communicates both sides of inlet/outlet of the hydraulic motor at the shutoff position.

In the present invention, during a process of changing a rotational speed of the common member from a low speed to a high speed, in the case that the capacity of the one hydraulic motor of the variable displacement type is reduced to be zero, the supply of pressure oil from the hydraulic pump to the hydraulic motor is shut off by the shutoff valve. Accordingly, even if the hydraulic motor continues to rotate by the force from the common member, the hydraulic motor rotates in a state that the pressure is reduced. As a result, a torque loss or an energy loss due to the rotation of the hydraulic motor can be reduced. Further, the switching of the shutoff valve is executed in the case that the capacity of the hydraulic motor is zero and the flow rate at the shutoff valve is zero. Accordingly, the switching can be smoothly performed without effect of flow force.

Further, in the case that the shutoff valve has been switched to the shutoff position, because the both sides of the inlet/outlet of the hydraulic motor, to which the supply of pressure oil is shut off by the shutoff valve, communicate with each other through the shutoff valve, hydraulic oil can be kept in the hydraulic motor and an appropriate lubrication can be performed. Further, in the case that the shutoff valve has been switched to the shutoff position, and in the case that the capacity of the hydraulic motor, to which the supply of pressure oil is shut off by the shutoff valve, is increased from zero due to a malfunction, the hydraulic oil circulates in a short circuit between the both sides of the inlet/outlet of the hydraulic motor and the shutoff valve, it is prevented that a high pressure is generated or a cavitation is generated.

Now, a preferred embodiment of the present invention will be described. In the preferred embodiment, the hydraulic motors connected in parallel with the hydraulic pump are two hydraulic motors and both of the hydraulic motors are the variable displacement type. One hydraulic motor is the electronic control type capable of changing a capacity to zero, and the other hydraulic motor is a hydraulic control type incapable of changing a capacity to zero. In such a structure, by changing the capacities of the two variable displacement hydraulic motors connected in parallel with the hydraulic pump in order, power transmission can be effectively carried out over a wide range of rotation speeds. Moreover, even if the hydraulic motor of the electronic type becomes out of control due to a failure in electric system and the capacity of the hydraulic motor becomes zero, the capacity of the other hydraulic motor of the hydraulic control type does not become zero. Accordingly, a required minimum amount of power can be transmitted to the common member.

Further, in another preferred embodiment, the shutoff valve shuts off at the shutoff position only the entrance side of the hydraulic motor in a rotation direction to be mainly used, and maintains the communication between the exit side and the hydraulic pump side. In such a structure, in the case that the supply of pressure oil to hydraulic motor is shut off by the shutoff valve, the shutoff valve shuts off only the entrance side of the hydraulic motor in the rotation direction to be mainly used, and the communication between the exit side and the hydraulic pump side is maintained. Accordingly, if the hydraulic oil in the hydraulic motor leaks, the hydraulic oil is supplied into the hydraulic motor from the exit side, and an appropriate lubrication condition can be ensured. Further, the pressure at the exit side of the hydraulic motor is low because only an intake pressure of the hydraulic pump is applied thereto. Accordingly, the reduction effect of energy loss by the shutoff valve is not inhibited. Moreover, in the case that the capacity of the hydraulic motor is increased from zero due to a malfunction in the case that the shutoff valve has been switched to the shutoff position, the generation of the high pressure or the generation of the cavitation at the exit side of the hydraulic motor can be prevented.

Further, in another preferred embodiment, between the exit side of the hydraulic motor in the rotation direction to be mainly used and a return conduit to the hydraulic pump, a check valve is provided in parallel with the shutoff valve. In such a structure, in the case that the capacity of the hydraulic motor is increased from zero due to a malfunction in the case that the shutoff valve has been switched to the shutoff position, the hydraulic oil circulates in the short circuit between the both sides of the inlet/outlet of the hydraulic motor and the shutoff valve. Moreover, even if the hydraulic oil leaks inside, since the hydraulic oil is supplied from the return conduit side to the hydraulic pump through the check valve, the generation of the cavitation can be surely prevented.

Further, in another preferred embodiment, between the exit side of the hydraulic motor in the rotation direction to be mainly used and a return conduit to the hydraulic pump, a back pressure valve is provided in parallel with the shutoff valve. In such a structure, in the case that the shutoff valve has been switched to the shutoff position, the both sides of the inlet/outlet of the hydraulic motor, to which the supply of pressure oil is shut off by the shutoff valve, communicate with each other through the shutoff valve, and the hydraulic oil is kept in the hydraulic motor. Moreover, a pressure at the exit side of the hydraulic motor is controlled to be a value obtained by subtracting a differential pressure value of the back pressure valve from the intake pressure of the hydraulic pump, more appropriate lubrication can be performed. Moreover, in the case that the capacity of the hydraulic motor is increased from zero due to a malfunction in the case that the shutoff valve has been switched to the shutoff position, the hydraulic oil circulates in the short circuit between the both sides of the inlet/outlet of the hydraulic motor and the shutoff valve. Even if the hydraulic oil leaks inside, the hydraulic oil is supplied from the return conduit side to the hydraulic pump through the back pressure valve, and the generation of the cavitation can be surely prevented.

Further, between the output axis of the electronic control type variable displacement hydraulic motor and the common member, a clutch can be provided. In such a structure, in the case that the capacity of the electronic control type variable displacement hydraulic motor is reduced to be zero, by shutting off the supply of the pressure oil to the hydraulic motor by the shutoff valve, and by stopping the rotation of the output axis of the hydraulic motor by disconnecting the clutch, an energy loss by the hydraulic motor of zero capacity can be eliminated.

### BRIEF DESCRIPTION OF THE DRAWINGS

Fig. 1 is a view illustrating a schematic structure of a hydraulic power transmission device according to the first embodiment of the present invention;
Fig. 2 is an enlarged view of a vicinity of II in Fig. 1;
Fig. 3 is a flowchart illustrating control contents of a controller;
Figs. 4A, 4B, and 4C are characteristic views illustrating relations between motor capacities and traveling speeds, and specifically, Fig. 4A illustrates a case of a HA motor, Fig. 4B illustrates a case of an EP motor, and Fig. 4C illustrates a case of the total of both motors;
Fig. 5 is a view illustrating the second embodiment corresponding to Fig. 1;
Fig. 6 is an enlarged view of a vicinity of VI in Fig. 5;
Fig. 7 is a view illustrating the third embodiment corresponding to Fig. 1;
Fig. 8 is a view illustrating the fourth embodiment corresponding to Fig. 1; and
Fig. 9 is a view illustrating the fifth embodiment corresponding to Fig. 1.

### DESCRIPTION OF THE PREFERRED EMBODIMENTS

Hereinafter, preferred embodiments embodying the present invention will be described with reference to the drawings.

### First Embodiment

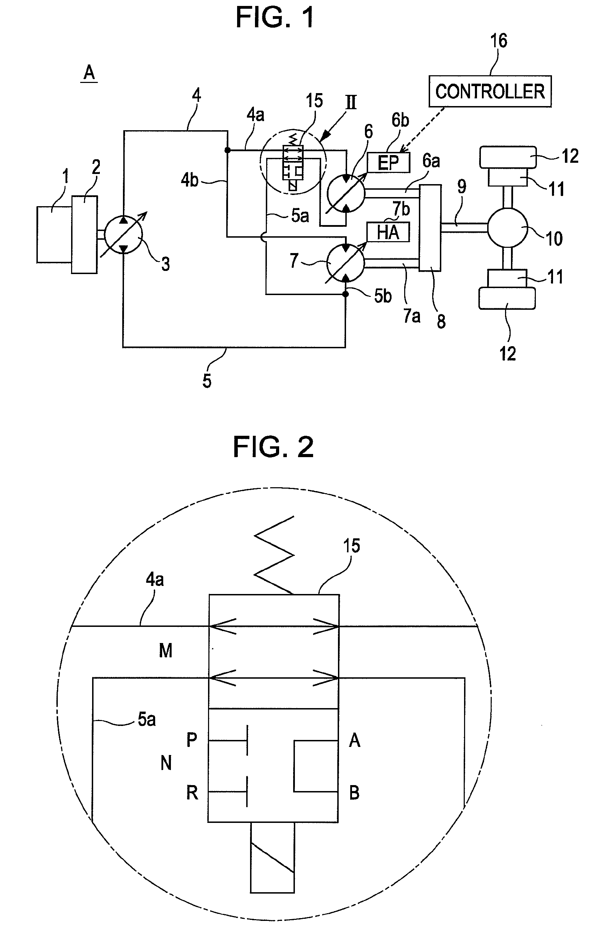

Fig. 1 illustrates a schematic structure of a hydraulic power transmission device A according to a first embodiment of the present invention. The power transmission device A is installed in a travel drive system of a working machine. A variable displacement hydraulic pump 3 is connected to an engine 1 through a power divider 2. The hydraulic pump 3 can discharge pressure oil in both directions. To the hydraulic pump 3, through main conduits 4 and 5, two hydraulic motors 6 and 7 are connected in parallel. Output axes 6a and 7a of the both oil pressure motors 6 and 7 are connected to a rotary shaft 9, which is a common member, in order to transmit power through a power combine 8, which includes a gear or the like. The rotary shaft 9 drives left and right hubs 11, 11 and wheels 12, 12 through a differential gear 10 or the like.

Both of the two hydraulic motors 6 and 7 are variable displacement type. One of the motors, that is, the hydraulic motor 6 is an electronic control type in which an inclination angle or a capacity is controlled to be changed by a current value, and the capacity can be changed to be zero. The other hydraulic motor 7 is a hydraulic control type in which an inclination angle or a capacity is controlled to be changed by an oil pressure, and the capacity cannot be changed to be zero.

The main conduits 4 and 5 are branched at the sides of the hydraulic motors 6 and 7 to be two conduits respectively, that is, a total of four conduits. The four branched conduits 4a, 4b, 5a, and 5b are connected to the inlet/outlet of the corresponding hydraulic motors 6 and 7 respectively. In the four branched conduits 4a, 4b, 5a, and 5b, a shutoff valve 15 is provided, which shuts off the supply of the pressure oil from the hydraulic pump 3 to the hydraulic motor 6 in the case that the capacity of the hydraulic motor 6 is zero, to the branched conduits 4a and 5a connected to the both sides of the inlet/outlet of the electronic control type hydraulic motor 6. The shutoff valve 15, as enlarged and shown in detail in Fig. 2, includes an electromagnetic type four-ports/two-positions type switching valve. At a shutoff position N of the shutoff valve 15, an A port and a B port of the hydraulic motor 6 side communicate with each other. Thus, the both sides of the inlet/outlet of the hydraulic motor 6 communicate with each other.

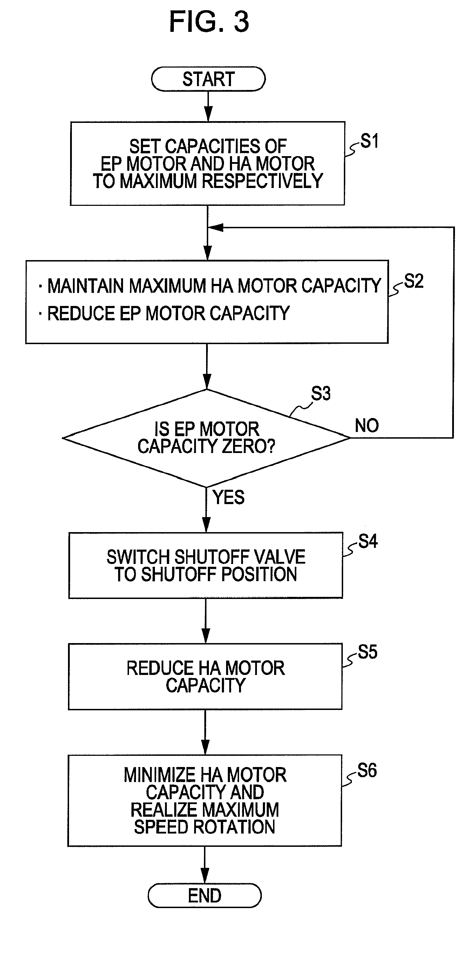

An electronic control part 6b of the electronic control type hydraulic motor 6 is controlled by a controller 16. The controller 16 controls an electric part (for example, an electromagnetic part of a pilot valve) of a hydraulic control part 7b of the hydraulic control type hydraulic motor 7, an electromagnetic part of the shutoff valve 15, or the like. The control of the controller 16 is executed, for example, in a case of changing rotational speeds of the wheels 12, that is, travel speeds of the working device, from a low speed to a high speed, according to the flowchart illustrated in Fig. 3. The meaning of "low speed" in this specification involves zero.

That is, in Fig. 3, after the process is started, first, at step S1, both capacities of the electronic control type hydraulic motor (hereinafter, referred to as EP motor) 6 and the hydraulic control type hydraulic motor (hereinafter, referred to as HA motor) 7 are set to be maximum. In the acceleration of the motors 6 and 7, it is enough to increase the capacities of the motors 6 and 7 at an appropriate value in accordance with the traveling speed, and it is not necessary to increase it to the maximum speed. Then, at step S2, while the capacity of the HA motor 7 is maintained to be maximum, the capacity of the EP motor 6 is reduced. At step S3, whether the capacity of the EP motor 6 is zero or not is determined. If the determination is NO, the process returns to step S2, and if the determination is YES, the process proceeds to step S4.

At step S4, the shutoff valve 15 is switched from a communication position M to the shutoff position N. Then, at step S5, the capacity of the HA motor 7 is reduced, at step S6, the capacity of the HA motor 7 is set to be minimum, and the control is completed.

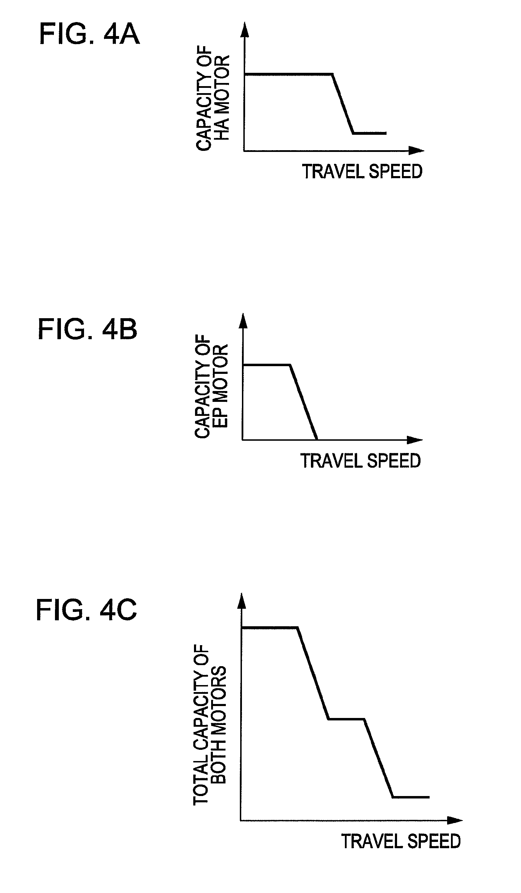

The capacity control of the HA motor 7 to changing travel speeds is shown in Fig. 4A. The capacity control of the EP motor 6 to changing travel speeds is shown in Fig. 4B. The capacity control of the total of the both motors 6 and 7 is shown in Fig. 4C.

Accordingly, in the hydraulic power transmission device A, in the case that the capacity of the EP motor 6 is reduced to be zero during the process of changing the travel speed of the working machine from a low speed to a high speed, the shutoff valve 15 is switched from the communication position M to the shutoff position N, and the supply of the pressure oil from the hydraulic pump 3 to the EP motor 6 is shut off. Accordingly, even if the EP motor 6 continues to rotate with rotating force from the rotary shaft 9, the EP motor 6 rotates in a state that the pressure is reduced. As a result, an energy loss due to the rotation of the EP motor 6 can be reduced, and the efficiency can be highly increased. Further, the switching of the shutoff valve 15 is executed in the case that the capacity of the EP motor 6 is zero and the flow rate at the shutoff valve is zero, and therefore, flow force does not act on. Accordingly, the switching of the shutoff valve 15 can be smoothly carried out.

Further, in the case that the shutoff valve 15 has been switched to the shutoff position N, because the both sides of the inlet/outlet of the EP motor 6 communicate with each other through the shutoff valve 15, hydraulic oil can be kept in the EP motor 6 and an appropriate lubrication can be performed. Further, in the case that the capacity of the EP motor 6 is increased from zero due to a malfunction in the case that the shutoff valve 15 has been switched to the shutoff position N, or in the case that the shutoff valve 15 is switched to the shutoff position N due to a malfunction in the case that the capacity of the EP motor 6 is not zero, the hydraulic oil circulates in a short circuit between the both sides of the inlet/outlet of the EP motor 6 and the shutoff valve 15. Accordingly, it is prevented that a high pressure is generated or a cavitation is generated.

Further, in this embodiment, after the capacity of the EP motor 6 becomes zero, the capacity of the HA motor 7 is reduced. Accordingly, power transmission can be effectively carried out over a wide range of travel speeds. Moreover, in the case that the EP motor 6 becomes out of control due to a failure in electric system and the capacity of the EP motor 6 becomes zero, the capacity of the HA motor 7 does not become zero. Accordingly, a required minimum amount of power can be transmitted to the common rotary shaft 9 or the wheels 12, and very effective in the view of measures for troubles.

### Second Embodiment

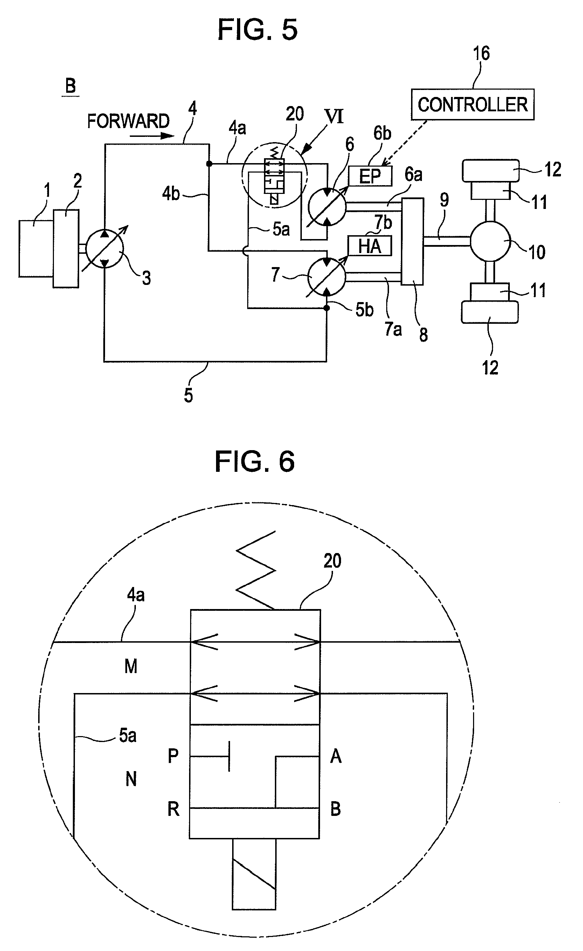

Fig. 5 illustrates a schematic structure of a hydraulic power transmission device B according to the second embodiment of the present invention. A basic structure of the power transmission device B is similar to that of the power transmission device A according to the first embodiment. Accordingly, the same numerals are given to the same members and those descriptions are omitted.

A point different from that of the first embodiment is that a shutoff valve 20 shuts off a supply of pressure oil from the hydraulic pump 3 to the EP motor 6 in the case that the capacity of the EP motor 6 is zero. That is, the shutoff valve 20, as enlarged and shown in detail in Fig. 6, similarly to the case of the shutoff valve 15 in the first embodiment, includes an electromagnetic type four-ports/two-positions type switching valve. However, at the shutoff position N, the A port and the B port of the EP motor 6 side communicate with each other and the both sides of the inlet/outlet of the EP motor 6 also communicate with each other. Further, at the position, only between a P port of an entrance side in a forward rotation direction to be mainly used of the EP motor 6 and the A port is shut off, and the B port of the exit side communicates with an R port. Accordingly, the communication between the exit side of the EP motor 6 and the hydraulic pump 3 side is maintained.

Accordingly, in the hydraulic power transmission device B, because its basic structure is similar to that of the first embodiment, similar operational advantages can be obtained. Moreover, the following advantages can also be obtained.

That is, in the case that the supply of pressure oil to the EP motor 6 is shut off by the shutoff valve 20, the shutoff valve 20 shuts off only the entrance side of the EP motor 6 in the forward rotation direction to be mainly used, and the communication between the exit side and the hydraulic pump 3 side is maintained. Accordingly, if the hydraulic oil in the EP motor 6 leaks, the hydraulic oil is supplied into the EP motor 6 from the exit side, and an appropriate lubrication condition can be ensured. Further, since only an intake pressure of the hydraulic pump 3 is applied to the pressure at the exit side of the EP motor 6, the pressure at the exit side of the EP motor 6 is low. Accordingly, the reduction effect of energy loss by the shutoff valve 20 is not inhibited. Moreover, in the case that the capacity of the EP motor 6 is increased from zero due to a malfunction in the case that the shutoff valve 20 has been switched to the shutoff position N, the generation of the high pressure or the generation of the cavitation at the exit side of the EP motor 6 can be prevented more firmly than the case of the first embodiment.

In the second embodiment, in the whole traveling time, only at the time of forward traveling, the reduction effect of energy loss by the shutoff valve 20 can be obtained, and at the time of backward traveling, the effect can not be obtained. However, since the rate of the backward traveling in the whole traveling time is low, so substantially this is not a big problem.

### Third Embodiment

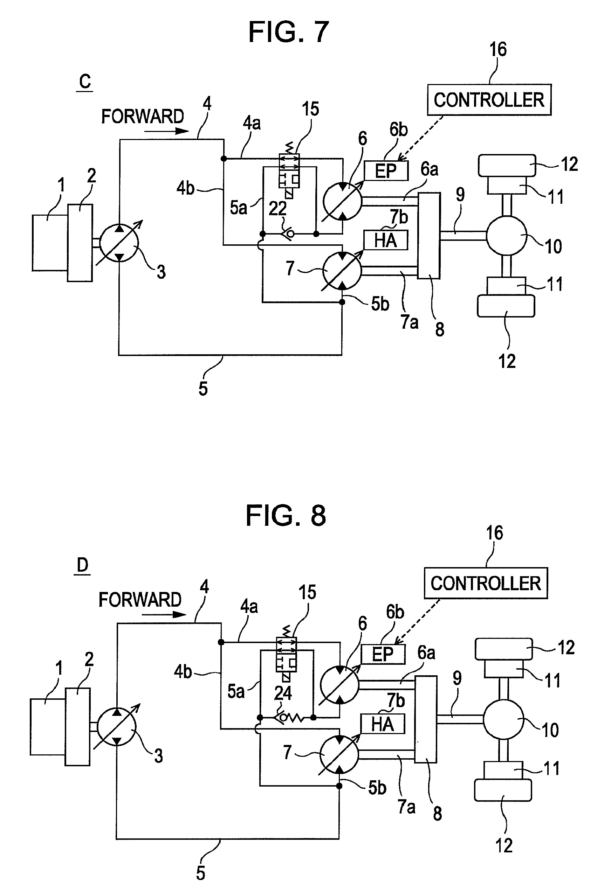

Fig. 7 illustrates a schematic structure of a hydraulic power transmission device C according to the third embodiment of the present invention. A basic structure of the power transmission device C is similar to that of the power transmission device A according to the first embodiment. Accordingly, the same numerals are given to the same members and those descriptions are omitted.

Only the point different from that of the first embodiment is that a check valve 22 which is arranged in parallel with the shutoff valve 15 and allows a flow into the EP motor 6 is provided between an exit side of the EP motor 6 in the forward rotation direction to be mainly used and the branched conduit 5a of the main conduit 5 which is a return conduit to the hydraulic pump 3.

With the difference, in the power transmission device C, in the case that the capacity of the EP motor 6 is increased from zero due to a malfunction in the case that the shutoff valve 15 has been switched to the shutoff position N, similarly to the case of the first embodiment, the hydraulic oil circulates in the short circuit between the both sides of the inlet/outlet of the EP motor 6 and the shutoff valve 15. However, even if the hydraulic oil leaks inside, the hydraulic oil is supplied from the branched conduit 5a side of the main conduit 5 through the check valve 22, and the generation of the cavitation can be prevented more firmly than the case of the first embodiment.

### Fourth Embodiment

Fig. 8 illustrates a schematic structure of a hydraulic power transmission device D according to the fourth embodiment of the present invention. A basic structure of the power transmission device D is similar to that of the power transmission device A according to the first embodiment. Accordingly, the same numerals are given to the same members and those descriptions are omitted.

Only the point different from that of the first embodiment is that a back pressure valve 24 which is arranged in parallel with the shutoff valve 15 and allows a flow into the EP motor 6 is provided between the exit side of the EP motor 6 in the forward rotation direction to be mainly used and the branched conduit 5a of the main conduit 5 which is the return conduit to the hydraulic pump 3.

With the difference, in the power transmission device D, in the case that the shutoff valve 15 has been switched to the shutoff position N, the both sides of the inlet/outlet of the EP motor 6 communicate with each other through the shutoff valve 15, and the hydraulic oil is kept in the EP motor 6. Moreover, a pressure at the exit side of the EP motor 6 is controlled to be a value obtained by subtracting a differential pressure value of the back pressure valve 24 from the intake pressure of the hydraulic pump 3, a more appropriate lubrication can be performed as compared to the case of the first embodiment. Moreover, in the case that the capacity of the EP motor 6 is increased from zero due to a malfunction in the case that the shutoff valve 15 has been switched to the shutoff position N, similarly to the case of the first embodiment, the hydraulic oil circulates in the short circuit between the both sides of the inlet/outlet of the EP motor 6 and the shutoff valve 15. However, if the hydraulic oil leaks inside, the hydraulic oil is supplied from the branched conduit 5a side of the main conduit 5 through the back pressure valve 24, and the generation of the cavitation can be prevented more firmly than the case of the first embodiment.

### Fifth Embodiment

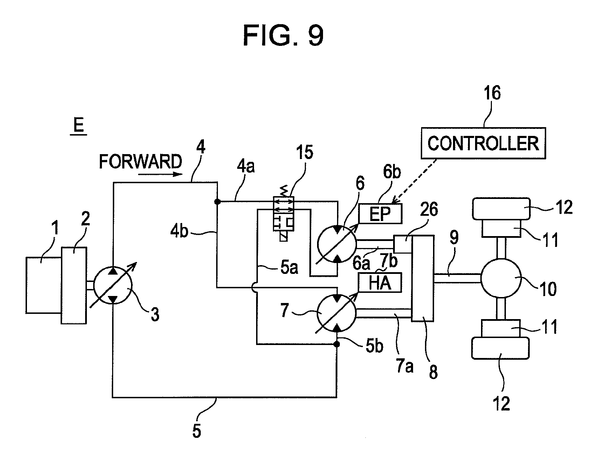

Fig. 9 illustrates a schematic structure of a hydraulic power transmission device E according to the fifth embodiment of the present invention. A basic structure of the power transmission device E is similar to that of the power transmission device A according to the first embodiment. Accordingly, the same numerals are given to the same members and those descriptions are omitted.

Only the point different from that of the first embodiment is that a clutch 26 is provided between the output axis 6a of the EP motor 6 and the power combine 8.

With the difference, in the power transmission device E, in the case that the capacity of the EP motor 6 is reduced to be zero during the process changing the travel speed of the working machine from a low speed to a high speed, by shutting off the supply of the pressure oil to the EP motor 6 by the shutoff valve 15, and by stopping the rotation of the output axis 6a of the EP motor 6 by disconnecting the clutch 26, an energy loss by the EP motor 6 can be eliminated. Thus, according to the fifth embodiment, the efficiency can be further increased as compared with the case of the first embodiment.

It is to be understood that the present invention is not limited to the above-described embodiments 1 to 5, but covers various modifications. For example, in each of the above-described embodiments, it has been described that the hydraulic power transmission devices A to E which are provided with the two variable displacement hydraulic motors 6 and 7 which are connected in parallel with the hydraulic pump 3. However, the present invention is not limited to the case in which the number of the hydraulic motors is two, but the number of the hydraulic motors can be more than two. Moreover, in such a case, all of the hydraulic motors are not necessary to be the variable displacement type, but it is enough that at least one hydraulic motor is the variable displacement type.

Further, the hydraulic power transmission devices A to E according to each embodiment are installed in the travel drive system of the working machine. However, the present invention can also be applied to hydraulic power transmission devices which are installed in winch drive systems such as a traveling type crane. In such a case, with respect to a common member to which a plurality of output axes of a hydraulic motor are connected in order to transmit power, not only the drive axis of the winch, but also a drum of the winch can be used. Moreover, in a case of a hydraulic power device installed in the winch system, with respect to a rotation direction of the hydraulic motor to be mainly used can be either a lifting direction or a lowering direction.

Although the invention has been described with reference to the preferred embodiments in the attached figures, it is noted that equivalents may be employed and substitutions made herein without departing from the scope of the invention as recited in the claims.

A hydraulic power transmission device A according to the present invention includes a hydraulic pump 3 capable of discharging pressure oil in both directions and a plurality of hydraulic motors 6 and 7 connected in parallel with the hydraulic pump. In the plurality of hydraulic motors, at least one hydraulic motor is a variable displacement type. Output axes 6a and 7a of the plurality of hydraulic motors are connected to a common member 9 in order to transmit power. The one hydraulic motor 6 of the variable displacement type is an electronic control type capable of changing a capacity to zero. A shutoff valve 15 is provided, which is for shutting off a supply of pressure oil from the hydraulic pump to the hydraulic motor in the case that the capacity of the hydraulic motor 6 is zero. The shutoff valve 15 communicates both sides of inlet/outlet of the hydraulic motor at the shutoff position. Accordingly, in the present invention, energy loss can be reduced and highly effective.

## Claims

1. A hydraulic power transmission device comprising:
a hydraulic pump (3) capable of discharging pressure oil in both directions;
a plurality of hydraulic motors (6,7) connected in parallel with the hydraulic pump (3) wherein at least one hydraulic motor (6) of the plurality of the hydraulic motors is a variable displacement type; and
a common member (9) to which output axes (6a, 7a) of the plurality of hydraulic motors (6,7) are connected in order to transmit power,
**characterized in that**
the hydraulic motor (6) of the variable displacement type is an electronic control type capable of changing a capacity to zero, and a shutoff valve (15) for shutting off a supply of pressure oil from the hydraulic pump (3) to the hydraulic motor (6) in the case that the capacity of the hydraulic motor (6) is zero is provided, and the shutoff valve (15) communicates both sides of inlet/outlet of the hydraulic motor (3) at the shutoff position.

2. The hydraulic power transmission device according to Claim 1, wherein the hydraulic motors (6, 7) connected in parallel with the hydraulic pump (3) are two hydraulic motors and both of the hydraulic motors are the variable displacement type, the one (6) of the hydraulic motors being the electronic control type capable of changing a capacity to zero, the other (7) of the hydraulic motors being a hydraulic control type incapable of changing a capacity to zero.

3. The hydraulic power transmission device according to Claim 1 or 2, wherein the shutoff valve (15) shuts off at the shutoff position only the entrance side of the hydraulic motor in a rotation direction to be mainly used, and maintains the communication between the exit side and the hydraulic pump side.

4. The hydraulic power transmission device according to Claim 1 or 2, wherein a check valve (22) is provided in parallel with the shutoff valve (15) between the exit side of the hydraulic motor in the rotation direction to be mainly used and a return conduit to the hydraulic pump (3).

5. The hydraulic power transmission device according to Claim 1 or 2, wherein a back pressure valve (24) is provided in parallel with the shutoff valve (15) between the exit side of the hydraulic motor in the rotation direction to be mainly used and a return conduit to the hydraulic pump (3).

6. The hydraulic power transmission device according to any one of Claims 1 to 5, wherein a clutch (26) is provided between the output axis (6a) of the electronic control type variable displacement hydraulic motor and the common member (9) .
